(19) Europäisches Patentamt / European Patent Office / Office européen des brevets

(11) **EP 4 694 217 A1**

(12) **EUROPEAN PATENT APPLICATION**
published in accordance with Art. 153(4) EPC

(43) Date of publication:
**11.02.2026  Bulletin 2026/07**

(21) Application number: **24787903.4**

(22) Date of filing: **25.03.2024**

(51) International Patent Classification (IPC):
*H04W 4/029* (2018.01)

(52) Cooperative Patent Classification (CPC):
**H04W 4/02; H04W 4/029; H04W 72/0446;**
**H04W 72/0453**

(86) International application number:
**PCT/CN2024/083671**

(87) International publication number:
**WO 2024/212797 (17.10.2024 Gazette 2024/42)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:  **13.04.2023  CN 202310431146**

(71) Applicant: **Huawei Technologies Co., Ltd.**
**Shenzhen, Guangdong 518129 (CN)**

(72) Inventors:
• **GAO, Xin**
  **Shenzhen, Guangdong 518129 (CN)**
• **LIU, Mengting**
  **Shenzhen, Guangdong 518129 (CN)**
• **LI, Cheng**
  **Shenzhen, Guangdong 518129 (CN)**

(74) Representative: **Isarpatent**
**Patent- und Rechtsanwälte Partg mbB**
**Friedrichstraße 31**
**80801 München (DE)**

(54) **POSITIONING REFERENCE SIGNAL CONFIGURATION METHOD, COMMUNICATION SYSTEM, AND RELATED APPARATUS**

(57)    This application discloses a positioning reference signal configuration method, a communication system, and a related apparatus. In the method, an SL-PRS and data may be sent in a same slot based on a specified time-frequency mapping manner. The time-frequency mapping manner describes a time-frequency position of the SL-PRS relative to a DMRS in the data in the same slot, and the DMRS is a reference signal in a PSSCH. In this way, a device that sends the SL-PRS can configure a time-frequency position of the SL-PRS in advance, and sends the SL-PRS on the configured time-frequency position, thereby avoiding a collision between the SL-PRS and the DMRS in the PSSCH.

FIG. 2

## Description

This application claims priority to Chinese Patent Application No. 202310431146.0, filed with the China National Intellectual Property Administration on April 13, 2023 and entitled "POSITIONING REFERENCE SIGNAL CONFIGURATION METHOD, COMMUNICATION SYSTEM, AND RELATED APPARATUS", which is incorporated herein by reference in its entirety.

## TECHNICAL FIELD

This application relates to the field of communication technologies, and in particular, to a positioning reference signal configuration method, a communication system, and a related apparatus.

## BACKGROUND

During the evolution of a latest 3rd generation partnership project (3rd Generation Partnership Project, 3GPP) R18 standard, a sidelink (Sidelink) positioning manner is mentioned in the evolution of a next-generation positioning technology. During the evolution of the current 3GPP R18 standard, for the sidelink positioning manner, a new positioning reference signal, namely, a sidelink positioning reference signal (Sidelink Positioning reference signal, SL-PRS), is defined to implement a positioning function.

## SUMMARY

This application provides a positioning reference signal configuration method, a communication system, and a related apparatus, so that a time-frequency position of an SL-PRS is specified, and a device can send and receive the SL-PRS on the specified time-frequency position, thereby avoiding a collision between the SL-PRS and a DMRS in a PSSCH.

According to a first aspect, an embodiment of this application provides a positioning reference signal configuration method. The method may be applied to a first device, or may be applied to a chip in the first device, or may be applied to a logical module or software that can implement all or some functions of the first device. The following uses the first device as an example for description. The positioning reference signal configuration method includes: sending a first SL-PRS and first data in a same slot based on a first time-frequency mapping manner, where the first time-frequency mapping manner describes a time-frequency position of the first SL-PRS relative to a first demodulation reference signal DMRS in the first data in the same slot, and the first DMRS is a reference signal in a physical sidelink shared channel PSSCH.

According to the method provided in the first aspect, an SL-PRS and data may be sent in a same slot based on a fixed time-frequency mapping manner. In this way, a device that sends the SL-PRS may configure a time-frequency position of the SL-PRS in advance, and sends the SL-PRS on the configured time-frequency position, thereby avoiding a collision between the SL-PRS and the DMRS in the PSSCH, and avoiding an impact of a position of the SL-PRS in the slot on data demodulation performance.

With reference to the first aspect, in a possible implementation, the first SL-PRS and the first data are sent based on configuration information of an SL-PRS. The configuration information includes the number of symbols and a comb size. The first time-frequency mapping manner is determined based on the configuration information, where the number of symbols for the first SL-PRS in one slot is the number of symbols in the configuration information, and a comb size of the first SL-PRS in frequency domain is the comb size in the configuration information.

It can be learned that, before the SL-PRS is sent, the number of symbols and a comb size of the SL-PRS may be learned from the configuration information of the SL-PRS.

With reference to the first aspect, in a possible implementation, the configuration information further includes: an initial symbol location and an initial subcarrier location of the SL-PRS. The initial symbol location is a start symbol location of a second SL-PRS when a second SL-PRS is sent, the initial subcarrier location is a start subcarrier location of the second SL-PRS, and a slot in which the second SL-PRS is located does not include data.

The configuration information may further include a default initial symbol location and a default initial subcarrier location, so that when the SL-PRS is separately sent in a slot, the SL-PRS can be sent based on the default initial symbol location and the default initial subcarrier location. In addition, this reduces a process of notifying two devices, that respectively send and receive the SL-PRS, of a symbol location and a subcarrier location before the two devices send and receive the SL-PRS.

With reference to the first aspect, in a possible implementation, the configuration information included in a first device is information pre-configured in advance in the first device or information sent by a base station.

In other words, the configuration information may be information pre-configured in advance in a device, or may be information sent by a network device, for example, a base station.

With reference to the first aspect, in a possible implementation, the first time-frequency mapping manner is further determined based on a first start symbol location and a first start subcarrier location, where the first start symbol location is different from the initial symbol location, and the first start subcarrier location is different from the initial subcarrier location. Before sending the first SL-PRS and the first data in the same slot, the method further includes: sending the first start symbol location and the first start subcarrier location, where a start symbol location of the first SL-PRS is the first start symbol location, and a start subcarrier location of the first SL-PRS is the first start subcarrier location.

In other words, to cause both the sender device and the receiver device to send and receive the SL-PRS on an agreed time-frequency position, the device that sends the SL-PRS may notify a start symbol location and a start subcarrier location of the SL-PRS in advance before sending the SL-PRS, so that the device that receives the SL-PRS can learn of the time-frequency position of the SL-PRS in advance based on the configuration information, the start symbol location, and the start subcarrier location, to ensure that a receiver device can accurately receive the SL-PRS.

According to a second aspect, an embodiment of this application provides a positioning reference signal configuration method. The method may be applied to a second device, or may be applied to a chip in the second device, or may be applied to a logical module or software that can implement all or some functions of the second device. The following uses the second device as an example for description. The positioning reference signal configuration method includes: receiving a first SL-PRS and first data in a same slot based on a first time-frequency mapping manner, where the first time-frequency mapping manner describes a time-frequency position of the first SL-PRS relative to a first DMRS in the first data in the same slot, and the first DMRS is a reference signal in a PSSCH.

According to the method provided in the second aspect, an SL-PRS and data may be received in a same slot based on a fixed time-frequency mapping manner. In this way, a device that receives the SL-PRS may learn of a time-frequency position of the SL-PRS in advance, and receive the SL-PRS on the known time-frequency position, to accurately receive the SL-PRS, thereby ensuring positioning accuracy of positioning performed by the receiver device using the SL-PRS and performance of channel estimation performed by the receiver device using a DMRS.

With reference to the second aspect, in a possible implementation, the first SL-PRS and the first data are received based on configuration information of an SL-PRS. The configuration information includes the number of symbols and a comb size. The first time-frequency mapping manner is determined based on the configuration information, where the number of symbols for the first SL-PRS in one slot is the number of symbols in the configuration information, and a comb size of the first SL-PRS in frequency domain is the comb size in the configuration information.

It can be learned that, before the SL-PRS is received, the number of symbols and a comb size of the SL-PRS may be learned from the configuration information of the SL-PRS.

With reference to the second aspect, in a possible implementation, the configuration information further includes an initial symbol location and an initial subcarrier location of the SL-PRS. The initial symbol location is a start symbol location of a second SL-PRS when the second SL-PRS is received, the initial subcarrier location is a start subcarrier location of the second SL-PRS, and a slot in which the second SL-PRS is located does not include data.

The configuration information may further include a default initial symbol location and a default initial subcarrier location. In this way, when knowing that the slot in which the SL-PRS is located does not include data, the device that receives the SL-PRS may directly learn of the time-frequency position of the SL-PRS based on the default initial symbol location and the default initial subcarrier location, so that this reduces a process of notifying two devices, that respectively send and receive the SL-PRS, of a symbol location and a subcarrier location before the two devices send and receive the SL-PRS.

With reference to the second aspect, in a possible implementation, the configuration information included in a second device is information pre-configured in advance in the second device or information sent by a first device or a base station.

In other words, the configuration information may be information pre-configured in advance in a device, or may be information sent by a network device, for example, a base station, or by another terminal device.

With reference to the second aspect, in a possible implementation, the first time-frequency mapping manner is further determined based on a first start symbol location and a first start subcarrier location, where the first start symbol location is different from the initial symbol location, and the first start subcarrier location is different from the initial subcarrier location. Before receiving the first SL-PRS and the first data in the same slot, the method further includes: receiving the first start symbol location and the first start subcarrier location, where a start symbol location of the first SL-PRS is the first start symbol location, and a start subcarrier location of the first SL-PRS is the first start subcarrier location.

In other words, to cause both the sender device and the receiver device to send and receive the SL-PRS on an agreed time-frequency position, the device that receives the SL-PRS may learn of a start symbol location and a start subcarrier location of the SL-PRS in advance before receiving the SL-PRS, so that the device that receives the SL-PRS can learn of the time-frequency position of the SL-PRS in advance based on the configuration information, the start symbol location, and the start subcarrier location, to ensure that the receiver device can accurately receive the SL-PRS.

With reference to the second aspect, in a possible implementation, the method further includes: determining, based on the first SL-PRS, location information of a device that sends the first SL-PRS, where the location information includes one or more of the following: a distance, an angle, and an altitude.

It can be learned that the device that receives the SL-PRS may use the SL-PRS to position the device.

With reference to the first aspect and the second aspect, in a possible implementation, the first time-frequency mapping manner is further determined according to a rule for determining a symbol location of an SL-PRS. The rule for determining the symbol location includes: in a same slot, M symbols for the SL-PRS are at M symbol locations just before the last symbol for a DMRS in the PSSCH, or M symbols for the SL-PRS are at M symbol locations including and just before the last symbol in the PSSCH, where the M symbol locations do not include a symbol location of the DMRS in the PSSCH, and M is the number of symbols for the SL-PRS.

It can be learned that, the symbol location of the SL-PRS may be determined according to a preset rule, and both the sender device and the receiver device may determine the symbol location of the SL-PRS based on the symbol location of the DMRS in the PSSCH in the same slot and the preset rule. In this way, the sender device and the receiver device can obtain the time-frequency position of the SL-PRS through calculation, and can send and receive the SL-PRS on an agreed same time-frequency position, so that this reduces a process in which the sender device notifies the receiver device of the symbol location of the SL-PRS in advance, thereby reducing signaling overheads.

With reference to the first aspect and the second aspect, in a possible implementation, the first time-frequency mapping manner is further determined based on mapping relationships, for different numbers of symbols, between the symbol location of the SL-PRS and the total number of symbols in a slot, the number of symbols for the DMRS in the PSSCH, and the number of symbols occupied by a physical sidelink control channel PSCCH.

A symbol location of the first SL-PRS in a slot is determined based on a mapping relationship, for the number of symbols for the first SL-PRS, with the total number of symbols in the slot in which the first SL-PRS is located, the number of symbols for the DMRS in the PSSCH, and the number of symbols occupied by the PSCCH.

It can be learned that the symbol location of the SL-PRS may also be determined based on an association relationship between the SL-PRS and a related parameter of other data in a same slot. In this way, the sender device and the receiver device can obtain the time-frequency position of the SL-PRS through calculation, and can send and receive the SL-PRS on an agreed same time-frequency position, so that this reduces a process in which the sender device notifies the receiver device of the symbol location of the SL-PRS in advance, thereby reducing signaling overheads.

With reference to the first aspect and the second aspect, in a possible implementation, the first time-frequency mapping manner is further determined according to a rule for determining a start subcarrier location of a start symbol for the SL-PRS. The rule for determining the start subcarrier location includes: the start subcarrier location of the start symbol for the SL-PRS is determined by a value obtained by performing a modulo operation on a comb size of the SL-PRS based on a cyclic redundancy check CRC, and a start subcarrier location of the first SL-PRS in a slot is determined based on a value obtained by performing a modulo operation on a comb size of the first SL-PRS based on a first CRC, where the first CRC is a cyclic redundancy check of sidelink control information SCI.

It can be learned that, a start subcarrier location of the SL-PRS may be determined according to a preset rule, and both the sender device and the receiver device may obtain the start subcarrier location of the SL-PRS through calculation according to the preset rule, so that this reduces a process in which the sender device notifies the receiver device of the start subcarrier location of the SL-PRS in advance, thereby reducing signaling overheads.

According to a third aspect, an embodiment of this application provides a communication apparatus, where the apparatus includes a module or unit configured to implement the method described in the first aspect, the second aspect, any one of the implementations according to the first aspect, and any one of the implementations according to the second aspect.

According to a fourth aspect, an embodiment of this application provides a communication apparatus, including a processor, where the processor is coupled to a memory, and the memory is configured to store a program or instructions. When the program or the instructions are executed by the processor, the apparatus is enabled to perform the method described in the first aspect, the second aspect, any one of the implementations of the first aspect, and any one of the implementations of the second aspect.

According to a fifth aspect, an embodiment of this application provides an electronic device, including a memory, one or more processors, and one or more programs. When the one or more processors execute the one or more programs, the electronic device is enabled to implement the method described in the first aspect, the second aspect, any one of the implementations of the first aspect, and any one of the implementations of the second aspect.

According to a sixth aspect, an embodiment of this application provides a computer-readable storage medium, including instructions. When the instructions are run on an electronic device, the electronic device is enabled to perform the method described in the first aspect, the second aspect, any one of the implementations of the first aspect, and any one of the implementations of the second aspect.

According to a seventh aspect, an embodiment of this application provides a computer program product. When the computer program product runs on a computer, the computer is enabled to perform the method described in the first aspect, the second aspect, any one of the implementations of the first aspect, and any one of the implementations of the second aspect.

**BRIEF DESCRIPTION OF DRAWINGS**

FIG. 1 shows communication systems according to an embodiment of this application;

FIG. 2 is a schematic flowchart of a positioning reference signal configuration method according to an embodiment of this application;

FIG. 3 shows a possible slot structure in a sidelink communication process according to an embodiment of this application;

FIG. 4 is a schematic flowchart of another reference signal configuration method according to an embodiment of this application;

FIG. 5 is a diagram of a location of an SL-PRS in a slot according to a rule for determining a symbol location according to an embodiment of this application;

FIG. 6 is a diagram of a location of an SL-PRS in a slot according to a rule for determining a symbol location according to an embodiment of this application;

FIG. 7 is a diagram of a symbol location of an SL-PRS in a slot according to an embodiment of this application; and

FIG. 8 and FIG. 9 are diagrams of structures of possible communication apparatuses according to embodiments of this application.

**DESCRIPTION OF EMBODIMENTS**

The following describes technical solutions in embodiments of this application clearly and in detail with reference to the accompanying drawings.

During the evolution of a current 3GPP R18 standard, that an SL-PRS may be sent together with data is defined. However, currently, how to configure a time-frequency position of the SL-PRS is still not summarized.

When the SL-PRS is sent together with other data, a time-frequency position of the SL-PRS may affect data demodulation performance. Further, it is assumed that, if there is no clear indication or anti-collision mechanism, the SL-PRS is likely to collide with a demodulation reference signal (Demodulation Reference Signal, DMRS) in a physical sidelink shared channel (Physical sidelink shared channel, PSSCH), affecting positioning accuracy of positioning using the SL-PRS, and affecting channel estimation performance for the DMRS.

Therefore, how to configure the time-frequency position of an SL-PRS is an urgent problem to be resolved currently.

An embodiment of this application provides a positioning reference signal configuration method. The method relates to sending a first SL-PRS and first data in a same slot based on a first time-frequency mapping manner. Correspondingly, the first SL-PRS and the first data may be received in the same slot based on the first time-frequency mapping manner. The first time-frequency mapping manner describes a time-frequency position of the first SL-PRS relative to a first DMRS in the first data in the same slot, where the first DMRS is a reference signal in the PSSCH.

It can be learned that, the method specifies a time-frequency position of an SL-PRS relative to a DMRS in data, sent together with the SL-PRS, when a device sends or receives the SL-PRS, so that the device that sends the SL-PRS can allocate a time-frequency position of the SL-PRS in advance, and send the SL-PRS on the specified time-frequency position. Meanwhile, the device that receives the SL-PRS can obtain the time-frequency position of the SL-PRS in advance, and accurately receive the SL-PRS on the specified time-frequency position. In addition, according to the method, a collision between the SL-PRS and the DMRS in the PSSCH is further avoided, and positioning accuracy of positioning using the SL-PRS and performance of channel estimation using the DMRS are ensured.

The first time-frequency mapping manner may be determined based on configuration information of the SL-PRS, a specific parameter of or a rule for determining or a mapping table for a symbol location of the SL-PRS, and a specific parameter of or a rule for determining a start subcarrier location of the SL-PRS. The configuration information of the SL-PRS may include: the number of symbols, a comb size, and the like of the SL-PRS. For specific descriptions of the configuration information, the symbol location or the start subcarrier location of the SL-PRS, the determining rule, and the mapping table, refer to subsequent content. Details are not described herein.

First, to better understand the positioning reference signal configuration method disclosed in embodiments of this application, a communication system to which embodiments of this application are applicable is described.

Technical solutions in embodiments of this application may be applied to various communication systems, for example, a global system for mobile communication, a long term evolution (long term evolution, LTE) system, a universal mobile telecommunications system, a 4th generation (4th generation, 4G) mobile communication technology system, a next-generation radio access network (next-generation radio access network, NG-RAN), a new radio (new radio, NR) technology system, or a 5th generation mobile communication technology (5th generation mobile networks, 5G) system. In addition, with the continuous development of communication technologies, the technical solutions in embodiments of this application may be further applied to a subsequent evolved communication system, for example, a 6th generation mobile communication technology (6th generation mobile networks, 6G) system or a 7th generation mobile communication technology (7th generation mobile networks, 7G) system.

The communication system provided in this embodiment of this application may involve no network device, one or more network devices, and a plurality of terminal devices. Both uplink transmission and downlink transmission may be performed between the network device and the terminal device. In addition, the communication system may further include a channel for data/signal transmission between the network device and the terminal device, for example, a transmission medium like an optical fiber, a cable, or an atmosphere.

In embodiments of this application, the network device may be a device having a wireless transceiver function, or may be a chip disposed on the device having the wireless transceiver function. The network device includes but is not limited to: an evolved NodeB (evolved NodeB, eNB), a radio network controller (radio network controller, RNC), a NodeB (NodeB, NB), a network device controller (base station controller, BSC), a network device transceiver station (base transceiver station, BTS), a home network device (for example, a home evolved NodeB or home NodeB, HNB), a baseband unit (baseband unit, BBU), an access node (access point, AP) in a wireless fidelity (wireless fidelity, Wi-Fi) system, a wireless relay node, a wireless backhaul node, a transmission point (transmission and reception point, TRP or transmission point, TP), or the like. The network device may alternatively be a device used in a 4G, 5G, or even 6G system, for example, an evolved NodeB (NodeB, eNB, or e-NodeB, evolutional NodeB) in LTE, a next-generation LTE base station (next-generation eNodeB, ng-eNB), a next-generation base station (next-generation NodeB, gNodeB, or gNB), a transceiver point, or a transmission point (TRP or TP). The network device may alternatively be a network node that forms a gNB or a transmission point, for example, a baseband unit (BBU), a distributed unit (distributed unit, DU), a picocell (Picocell) network device, a femtocell (Femtocell) network device, or a road side unit (road side unit, RSU) in an intelligent driving scenario. The base station may be a macro base station, a micro base station, a picocell base station, a small cell, a relay station, a balloon station, or the like. Alternatively, the network device may be a server, a wearable device, a vehicle-mounted device, or the like. It may be understood that all or some functions of the network device in this application may alternatively be implemented by using a function of software that is run on hardware, or may be implemented by using a virtualization function that is instantiated on a platform (for example, a cloud platform).

In embodiments of this application, the terminal device may also be referred to as user equipment (user equipment, UE), a terminal, an access terminal, a subscriber unit, a subscriber station, a mobile station, a remote station, a remote terminal, a mobile device, a user terminal, a user agent, or a user apparatus, and may be used in a 4G system, a 5G system, a 6G system, or the like. The terminal device in embodiments of this application may be a joint device that performs digital signal transmission and receiving on an ordinary telephone line, or may be a mobile phone (mobile phone), a tablet computer (Pad), a computer having a wireless transceiver function, a head mounted display (head mounted display, HMD), a VR terminal device (for example, VR glasses), an augmented reality (augmented reality, AR) terminal device (for example, AR glasses), a mixed reality (mixed reality, MR) terminal device, a wireless terminal in industrial control (industrial control), a haptic terminal device, a vehicle-mounted terminal device, a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), an RSU of a type of a foregoing wireless terminal, a wearable terminal device, or the like.

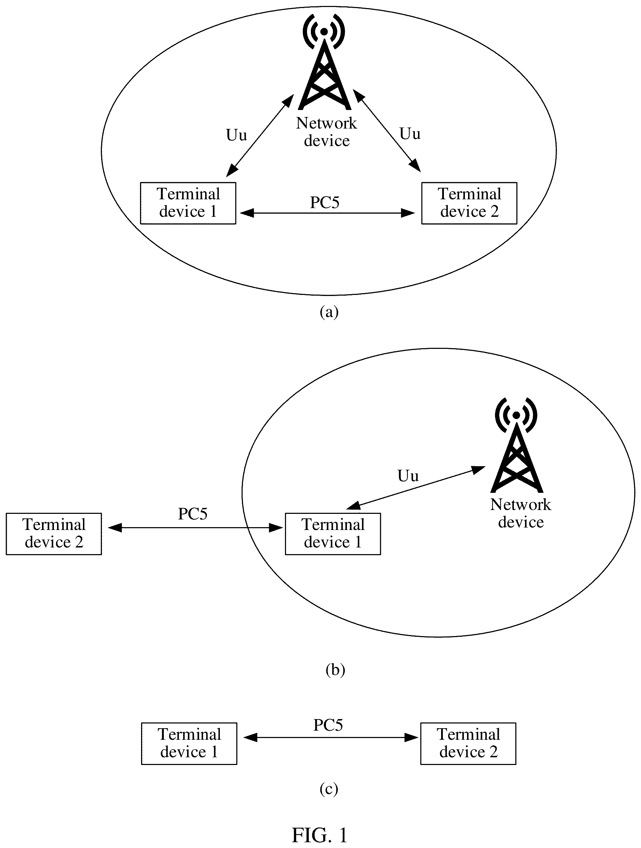

**FIG. 1 shows communication systems according to an embodiment of this application.** (a), (b), and (c) in FIG. 1 are respective diagrams of possible communication systems according to an embodiment of this application.

The communication system shown in (a) in FIG. 1 is described by using one network device and two terminal devices (namely, a terminal device 1 and a terminal device 2 shown in (a) in FIG. 1) as an example. In (a) in FIG. 1, a base station is used as an example of the network device and a mobile phone is used as an example of the terminal device.

In the communication system shown in (a) in FIG. 1, the terminal device 1 and the terminal device 2 are located within a communication coverage area of the network device, and both the terminal device 1 and the terminal device 2 may communicate with the network device. For example, the terminal device 1 (or the terminal device 2) and the network device may communicate with each other through a Uu interface. The Uu interface is a cellular network communication interface. In other words, communication between the terminal device 1 (or the terminal device 2) and the network device may be performed through an uplink or a downlink, and may be reliable communication with a long distance and a larger range. The terminal device 1 and the terminal device 2 may communicate with each other through a PC5 interface. The PC5 interface is a direct-connection communication interface. In other words, the terminal device 1 and the terminal device 2 may communicate with each other through a sidelink.

In this embodiment of this application, with reference to the communication system shown in (a) in FIG. 1, in an example, the terminal device 1 and the terminal device 2 may obtain configuration information that is of an SL-PRS and that is sent by the network device, and the terminal device 1 may send, to the terminal device 2 based on a specified time-frequency mapping manner, information including the SL-PRS and data. Correspondingly, the terminal device 2 may receive, based on the same time-frequency mapping manner, the information sent by the terminal device 1.

As shown in (b) in FIG. 1, the communication system may include a network device, a terminal device 1, and a terminal device 2. For specific descriptions of the network device and the terminal device, refer to the foregoing descriptions of the network device and the terminal device. Details are not described herein again.

In the communication system shown in (b) in FIG. 1, the terminal device 1 is located within a communication coverage area of the network device, and the terminal device 2 is located outside the communication range of the network device. In other words, the terminal device 1 may communicate with the network device, and the terminal device 2 cannot communicate with the network device. For example, the terminal device 1 and the network device may communicate with each other through a Uu interface, and the terminal device 1 and the terminal device 2 may communicate with each other through a PC5 interface. For specific descriptions of the Uu interface and the PC5 interface, refer to related content described in (a) in FIG. 1. Details are not described herein again.

In this embodiment of this application, with reference to the communication system shown in (b) in FIG. 1, in an example, the terminal device 1 may obtain configuration information that is of an SL-PRS and that is sent by the network device, the terminal device 1 may send the configuration information of the SL-PRS to the terminal device 2, and the terminal device 1 may send, to the terminal device 2 based on a specified time-frequency mapping manner, information including the SL-PRS and data. Correspondingly, the terminal device 2 may receive, based on the same time-frequency mapping manner, the information sent by the terminal device 1.

As shown in (c) in FIG. 1, the communication system may include a terminal device 1 and a terminal device 2. For specific descriptions of the terminal device, refer to the foregoing descriptions of the terminal device. Details are not described herein again.

In the communication system shown in (a) in FIG. 1, the terminal device 1 and the terminal device 2 are located outside a communication coverage area of the network device, and the terminal device 1 and the terminal device 2 may communicate with each other through a PC5 interface. For specific descriptions of the PC5 interface, refer to related content described in (a) in FIG. 1. Details are not described herein again.

In this embodiment of this application, with reference to the communication system shown in (c) in FIG. 1, in an example, the terminal device 1 may send configuration information of an SL-PRS to the terminal device 2, and the terminal device 1 may send, to the terminal device 2 based on a specified time-frequency mapping manner, information including the SL-PRS and data. Correspondingly, the terminal device 2 may receive, based on the same time-frequency mapping manner, the information sent by the terminal device 1.

In the following embodiments of this application, the terminal device 1 may alternatively be a first device, and the terminal device 2 may alternatively be a second device.

It may be understood that the communication system may further include more or fewer devices. For example, the communication system may further include a location management function (Location management function, LMF), a road side unit (Road side unit, RSU), and the like. This is not limited in embodiments of this application.

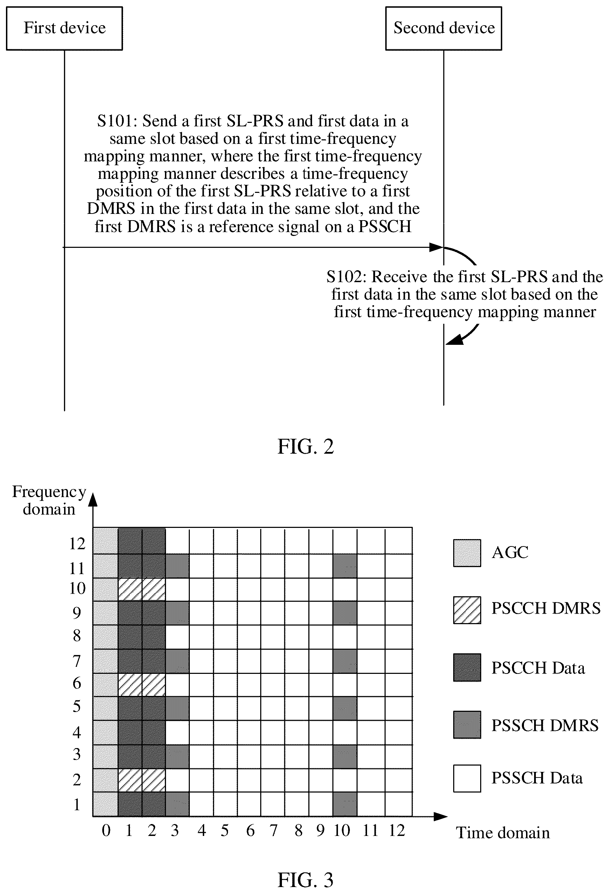

**FIG. 2 is a schematic flowchart of a positioning reference signal configuration method according to an embodiment of this application.**

As shown in FIG. 2, the positioning reference signal configuration method may include the following steps.

**S101:** A first device sends a first SL-PRS and first data to a second device in a same slot based on a first time-frequency mapping manner, where the first time-frequency mapping manner describes a time-frequency position of the first SL-PRS relative to a first DMRS in the first data in the same slot, and the first DMRS is a reference signal in a PSSCH.

A communication connection is established between the first device and the second device.

For example, a sidelink communication connection may be established between the first device and the second device, and may also be referred to as a device-to-device (device-to-device, D2D) communication connection.

The first device or the second device may be used as an initiator to initiate a request for establishing the sidelink communication connection.

The following uses an example in which the first device is used as an initiator, to roughly describe, in the following two cases, a process in which the communication connection is established between the first device and the second device.

Case 1: When a base station is used as a network device, the base station manages and controls the process in which the communication connection is established between the first device and the second device.

Specifically, the first device may send a request signal to the base station, where the request signal is used for requesting to pair with a nearby device that supports sidelink communication. After receiving the request signal, the base station may send a pairing signal to a device that is near the first device and that supports the sidelink communication, where the pairing signal includes an identifier of the first device. After receiving the pairing signal, the second device may establish the sidelink communication connection to the first device.

Case 2: When no network device is involved, the first device and the second device autonomously complete establishment of the communication connection.

Specifically, the first device may send, to the outside, a request signal including an identifier of the first device, where the request signal is used for requesting to pair with a nearby device that supports sidelink communication. After receiving the request signal, the second device may return a response to the first device, to establish the sidelink communication connection to the first device.

It can be learned that Case 1 is applicable to the terminal devices 1 and the terminal devices 2 in the communication systems shown in (a) and (b) in FIG. 1, and Case 2 is applicable to the terminal device 1 and the terminal device 2 in the communication system shown in (c) in FIG. 1.

A slot is a unit of a time-frequency resource, and includes J consecutive orthogonal frequency division multiplexing (Orthogonal Frequency Division Multiplexing, OFDM) symbols in time domain, where J is a natural number greater than zero. For example, FIG. 3 shows an example of a possible slot structure in a sidelink communication process.

As shown in FIG. 3, in the slot structure, locations of different signals in a same slot in time domain and frequency domain are described by using time domain as a horizontal coordinate and frequency domain as a vertical coordinate. From a perspective of the horizontal coordinate, one spacing represents one symbol interval, and from a perspective of the vertical coordinate, one spacing represents one subcarrier spacing.

It can be learned from FIG. 3 that the slot includes eight symbols, and one symbol includes 12 subcarriers. The eight symbols include symbols in automatic gain control (Automatic gain control, AGC), in a PSSCH, and in a physical sidelink control channel (Physical sidelink control channel, PSCCH). Each of the PSSCH and the PSCCH includes data (Data) and a demodulation reference signal (DMRS). A symbol location for the AGC in the slot structure is "0", symbol locations of a signal in the PSCCH in the slot structure include "1" and "2", and symbol locations of a signal in the PSSCH in the slot structure include "3", "4", "5", "6", "7", "8", "9", "10", "11", and "12".

The relative time-frequency position includes a relative time domain position and/or a relative frequency domain position. The first time-frequency mapping manner describes locations of the first SL-PRS relative to the DMRS in the PSSCH in time domain and frequency domain in the same slot. In this way, when a time-frequency position of the DMRS in the PSSCH is known, a time-frequency position of the first SL-PRS may be determined based on the time-frequency position of the DMRS, so that the first device can clearly indicate the time-frequency position of the first SL-PRS, send the first SL-PRS on the time-frequency position of the first SL-PRS, to determine the locations of the first SL-PRS relative to the DMRS in the PSSCH in time domain and in frequency domain, so as to avoid a collision between the first SL-PRS and the DMRS in the PSSCH.

**S102:** The second device receives, in the same slot based on the first time-frequency mapping manner, the first SL-PRS and the first data that are sent by the first device.

The second device receives the first SL-PRS and the first data by using a time-frequency mapping manner that is the same as the time-frequency mapping manner used when the first device sends the first SL-PRS and the first data.

In this way, the second device can accurately receive the first SL-PRS when the time-frequency position of the first SL-PRS is known. In addition, the locations of the first SL-PRS relative to the DMRS in the PSSCH in time domain and in frequency domain are used to avoid an impact of the first SL-PRS in the DMRS when the second device receives the DMRS in the PSSCH. This ensures performance of channel estimation performed by the second device using the DMRS.

Further, in a possible implementation, after obtaining the first SL-PRS, the second device may determine location information of the first device based on the first SL-PRS, where the location information may include one or more of the following: a distance, an angle, an altitude, and the like. The second device may estimate an actual geographical location of the first device based on the location information of the first device. The distance may be a distance from the first device to the second device, the angle may be a relative angle between the first device and the second device, and the altitude may be a relative altitude between the first device and the second device.

In addition, it should be noted that, in actual application, when the second device estimates the actual geographical location of the first device, in addition to receiving the first SL-PRS sent by the first device and determining the location information of the first device based on the first SL-PRS, the second device may also receive location information that is of the first device and that is determined by another terminal device, for example, a third device or a fourth device. The location information determined by the third device may be location information that is of the first device and that is determined, after the third device receives an SL-PRS sent by the first device, based on the SL-PRS by the third device, and the location information determined by the fourth device may be location information that is of the first device and that is determined, after the fourth device receives an SL-PRS sent by the first device, based on the SL-PRS by the fourth device.

In other words, in addition to sending the SL-PRS to the second device, the first device further sends an SL-PRS to another device, for example, the third device or the fourth device, to help position the first device.

For example, the actual geographical location of the first device may be estimated according to the following formula:

$$\sqrt{(x_1 - x_{UE})^2 + (y_1 - y_{UE})^2} - \sqrt{(x_2 - x_{UE})^2 + (y_2 - y_{UE})^2} = c * \Delta t_{21}$$

$$\sqrt{(x_1 - x_{UE})^2 + (y_1 - y_{UE})^2} - \sqrt{(x_3 - x_{UE})^2 + (y_3 - y_{UE})^2} = c * \Delta t_{31} \qquad \text{Formula 1}$$

$(x_i, y_i)$, where i=1, 2, and 3, represents a known location of an ith terminal device, which may be a location of the second device, the third device, or the fourth device. $(x_{UE}, y_{UE})$ represents a location of a to-be-positioned target, which may be the location of the first device. $\Delta t_{21}$ represents a time difference between arrival time $t_2$ that is of an SL-PRS and that is obtained by the third device through measurement and arrival time $t_1$ that is of an SL-PRS and that is obtained by the second device through measurement, $\Delta t_{31}$ represents a time difference between arrival time $t_3$ that is of an SL-PRS and that is obtained by the fourth device through measurement and the arrival time $t_1$ that is of the SL-PRS and that is obtained by the second device through measurement, and c is a speed of light.

In Formula 1, an optimal solution of the formula may be estimated by using an optimization algorithm like a least square algorithm or a particle swarm filtering algorithm, to calculate the actual geographical location of the first device.

It can be learned from step S101 and step S102 that, only when the first time-frequency mapping manner is known, the first device or the second device can use the first time-frequency mapping manner to send or receive the first SL-PRS and the first data. The following describes in detail manners of determining the first time-frequency mapping manner.

The following provides three manners of determining the first time-frequency mapping manner.

**Manner 1: Before an SL-PRS is sent, a time-frequency position of the SL-PRS is notified in** advance.

In this manner, the first time-frequency mapping manner may be determined based on configuration information of the SL-PRS, a first start symbol location, and a first start subcarrier location.

The configuration information of the SL-PRS may include: the number of symbols and a comb size. The number of symbols is the number of symbols occupied by the SL-PRS in one slot, and the comb size is a comb size of the SL-PRS in frequency domain.

When the first device sends the first SL-PRS and the first data, the first device may send the first SL-PRS and the first data based on the configuration information of the SL-PRS. In this way, when the first device sends the first SL-PRS, the number of symbols for the first SL-PRS in one slot is the number of symbols in the configuration information, and a comb size of the first SL-PRS in frequency domain is the comb size in the configuration information.

In the first device, the configuration information may be information pre-configured in advance in the first device, or may be information sent by a base station.

Correspondingly, when receiving the first SL-PRS and the first data, the second device may receive the first SL-PRS and the first data based on the configuration information of the SL-PRS. In this way, when the second device receives the first SL-PRS, the number of symbols for the first SL-PRS in one slot is the number of symbols in the configuration information, and an initial size of the first SL-PRS in frequency domain is the comb size in the configuration information.

In the second device, the configuration information may be information pre-configured in advance in the second device, or may be information sent by a base station or the first device.

It should be noted that the configuration information of the SL-PRS is configuration information for an SL-PRS in a shared resource pool. A resource pool may be understood as a group of pre-configured time-frequency resources. All terminal devices that use the resource pool to send and receive data may use same configuration information. The shared resource pool includes time-frequency resources of the SL-PRS and data. The time-frequency resources of the SL-PRS and the data in the shared resource pool are allocated, so that all terminal devices that use the shared resource pool in a communication system can send and receive the SL-PRS and the data based on same time-frequency allocation.

In addition, a start symbol location of the first SL-PRS is the first start symbol location, and a start subcarrier location of the first SL-PRS is the first start subcarrier location.

Before sending the first SL-PRS and the first data, the first device may first configure the time-frequency domain position of the first SL-PRS, and send the start symbol location and the start subcarrier location of the first SL-PRS to the second device in advance. In this way, before receiving the first SL-PRS and the first data, the second device may determine the time-frequency position of the first SL-PRS in advance based on the configuration information of the SL-PRS and the start symbol location and the start subcarrier location of the first SL-PRS, to accurately receive the first SL-PRS during reception of the first SL-PRS.

It may be understood that, information that is about the time-frequency position of the first SL-PRS and that is sent by the first device to the second device may be the first start symbol location and the first start subcarrier location, or may alternatively be a location of each symbol and a location of each occupied subcarrier of the first SL-PRS. The information that is about the time-frequency position of the first SL-PRS and that is sent by the first device to the second device is within the protection scope of embodiments of this application provided that the information can be used to determine the time-frequency position of the first SL-PRS, and the information that is of the time-frequency position of the first SL-PRS and that is sent by the first device to the second device is not limited in embodiments of this application.

In a possible implementation, the first device may send the start symbol location and the start subcarrier location of the first SL-PRS by sending the following sidelink control information (Sidelink control information, SCI) indication information to the second device:

SCI format 2-X:

Symbol offset - "X" bits using to indicate the symbol offset of the SL-PRS, where X is determained by the Time resource assignment
RE Offset - "N_comb" bits using to indicate the RE offset of the first symbol of SL-PRS, where N_comb is the comb size of SL-PRS configured by higher layer parameter combSize.

Symbol offset represents the start symbol location of the first SL-PRS, and RE Offset represents a start subcarrier location of a start symbol for the first SL-PRS on a frequency-domain subcarrier.

In a possible implementation, the configuration information of the SL-PRS may further include: an initial symbol location and an initial subcarrier location of the SL-PRS. The initial symbol location and the initial subcarrier location are default locations of the SL-PRS, and the default locations are represented as the following: If the SL-PRS is separately sent in a slot, the initial symbol location may be directly used as a start symbol location of the SL-PRS in the slot, and the initial subcarrier location is used as a start subcarrier location of the SL-PRS. In this way, the first device does not need to additionally send the start symbol location and the start subcarrier location of the SL-PRS to the second device, and does not need to consider whether the SL-PRS collides with the DMRS in the PSSCH. The first device and the second device may directly learn of the time-frequency position of the SL-PRS based on the configuration information, thereby reducing a complicated interaction procedure between the first device and the second device. In addition, the initial symbol location and the initial subcarrier location are the default locations of the SL-PRS, so that the device that receives the SL-PRS or a device that is performing resource selection can also learn of the time-frequency position of the SL-PRS without any underlying signaling indication, so as to determine a position for detecting the SL-PRS.

For example, the first device may send a second SL-PRS to the second device, where a slot in which the second SL-PRS is located does not include data. In this case, a start symbol location of the second SL-PRS in the slot is the initial symbol location in the configuration information, and a start subcarrier location of the second SL-PRS in the slot is the initial subcarrier location in the configuration information.

It should be noted that when the configuration information of the SL-PRS includes the initial symbol location and the initial subcarrier location of the SL-PRS, the second device uses the initial symbol location and the initial subcarrier location as a start symbol location and a start subcarrier location of the SL-PRS in a slot by default. If the second device receives the start symbol location, namely, the first start symbol location, and the start subcarrier location, namely, the first start subcarrier location, that are additionally sent by the first device, the second device replaces the default initial symbol location and the default initial subcarrier location with the first start symbol location and the first start subcarrier location.

In a possible implementation, the first start symbol location is different from the initial symbol location, and the first start subcarrier location is different from the initial subcarrier location.

It may be understood that the configuration information of the SL-PRS may further include other content. This is not limited in embodiments of this application.

In a possible implementation, the configuration information of the SL-PRS may be configured as the following signaling:

```
SL-ResourcePool-r16 ::= SEQUENCE {

…

SL-PRS-Config-r18 ::= SEQUENCE {

…

numOfSymb       INTEGER   {1,2,4,6}

combSize        INTEGER   {1,2,4,6,…}

DefalutSymbOffset       INTEGER   {0,1,2,3,4,5,6,…}

DefalutREOffset        INTEGER   {0,1,2,3,4,5,6,…}

…

}

}
```

In the foregoing signaling, "numOfSymb" represents the number of symbols, "combSize" represents a comb size, "DefalutSymbOffset" represents an initial symbol location, and "DefalutREOffset" represents an initial subcarrier location.

It can be learned from Manner 1 that, for the time-frequency position of the SL-PRS, both devices may agree on the number of symbols and the comb size in advance, and before sending data, a sender device may notify a receiver device of the start symbol location and the start subcarrier location of the SL-PRS, so that the sender device and the receiver device can respectively send and receive the SL-PRS based on a same time-frequency mapping manner. In addition, different devices may agree on different frequency-domain subcarrier locations, to implement frequency division multiplexing for the SL-PRS and increase a multiplexing capability.

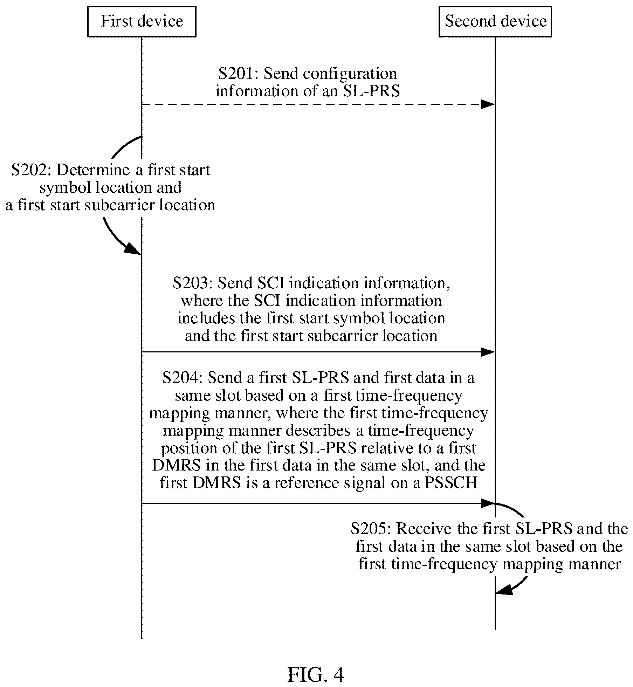

For ease of understanding Manner 1, the following describes in detail, with reference to FIG. 4, an interaction procedure between the sender device and the receiver device in Manner 1.

**FIG. 4 is a schematic flowchart of another reference signal configuration method according to an embodiment of this application.**

As shown in FIG. 4, the reference signal configuration method may include the following steps.

**S201:** A first device sends configuration information of an SL-PRS to a second device.

The first device may send the configuration information of the SL-PRS to the second device after establishing a communication connection to the second device. For specific descriptions of the configuration information, refer to the foregoing content. Details are not described herein again.

In addition, it should be noted that, if the first device has previously established a communication connection to the second device and sent the configuration information of the SL-PRS to the second device, the second device does not need to repeatedly send the configuration information when establishing a communication connection again. Alternatively, if the first device changes the configuration information, the first device may resend changed configuration information.

It may be understood that step S201 is an optional step, and the configuration information of the SL-PRS may be pre-configured in a device in a device development phase. In this case, the first device does not need to send the configuration information to the second device, and the configuration information is pre-configured in advance in the first device and the second device.

In addition, in a possible implementation, a third-party device (base station) may be further included, and the base station may send the configuration information of the SL-PRS to the first device and/or the second device.

**S202:** The first device determines a first start symbol location and a first start subcarrier location.

The first start symbol location and the first start subcarrier location may be a start symbol location and a start subcarrier location that are of the SL-PRS and that are configured by the first device to avoid a collision between the SL-PRS and a DMRS in a PSSCH that is sent together with the SL-PRS.

**S203:** The first device sends SCI indication information to the second device, where the SCI indication information includes the first start symbol location and the first start subcarrier location.

Correspondingly, the second device receives the SCI indication information that includes the first start symbol location and the first start subcarrier location.

**S204:** The first device sends a first SL-PRS and first data to the second device in a same slot based on a first time-frequency mapping manner, where the first time-frequency mapping manner describes a time-frequency position of the first SL-PRS relative to a first DMRS in the first data in the same slot, and the first DMRS is a reference signal in the PSSCH.

The first time-frequency mapping manner is determined based on the configuration information of the SL-PRS, the first start symbol location, and the first start subcarrier location, and the first time-frequency mapping manner may indicate a symbol location of the first SL-PRS in a slot and a subcarrier location of the first SL-PRS in frequency domain.

**S205:** The second device receives, in the same slot based on the first time-frequency mapping manner, the first SL-PRS and the first data that are sent by the first device.

It may be understood that, for specific content that is not described in detail in steps S201 to S205, refer to content in the foregoing steps S101 and S102. Details are not described herein again.

**Manner 2: The sender device and the receiver device determine the time-frequency position of the SL-PRS according to a preset rule.**

In this manner, the first time-frequency mapping manner may be determined based on the configuration information of the SL-PRS, a rule for determining a symbol location of the SL-PRS, and a rule for determining a start subcarrier location of a start symbol for the SL-PRS.

The configuration information of the SL-PRS may include: the number of symbols and a comb size, and may further include: an initial symbol location and an initial subcarrier location. For details about the configuration information of the SL-PRS, refer to the related descriptions in the foregoing Manner 1. Details are not described herein again.

The rule for determining the symbol location of the SL-PRS is used to determine a symbol location of the SL-PRS in a slot.

For example, assuming that the number of symbols for the SL-PRS is M, the rule for determining the symbol location may be any one of the following:

(1) In a same slot, M symbols for the SL-PRS are at M symbol locations just before the last symbol for the DMRS in the PSSCH, and the M symbol locations do not include a symbol location of the DMRS in the PSSCH.

Specifically, during determining of the symbol location of the SL-PRS, a symbol location occupied by the PSSCH may be first found in a slot, and then a symbol location of the last DMRS is found in the symbol location occupied by the PSSCH. Then, the M symbols for the SL-PRS are mapped to the M symbol locations just before the symbol location of the last DMRS, and in a mapping process, mapping starts from a symbol location just before the symbol location of the last DMRS. If there is another DMRS in the PSSCH, a symbol location of the DMRS is skipped and mapping is performed to a previous symbol location, until mapping of the M symbols is completed.

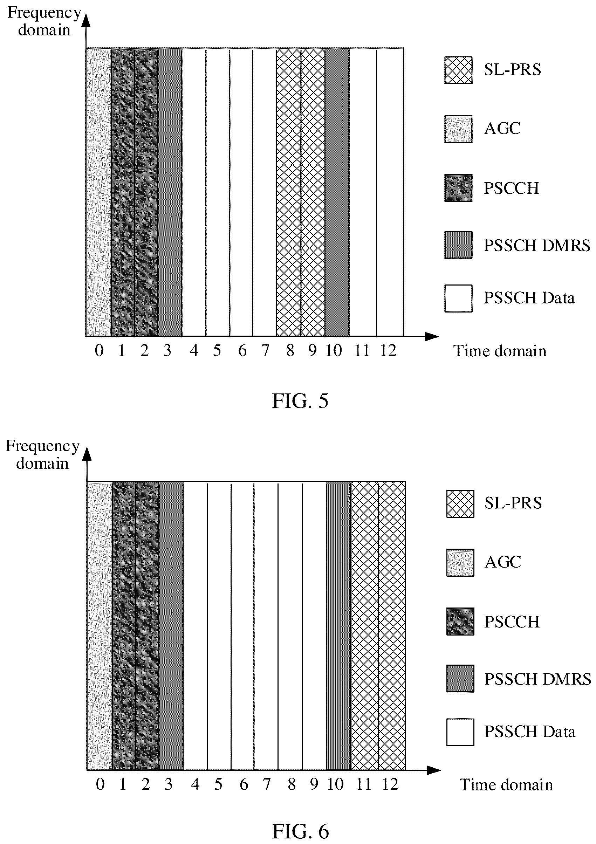

For example, FIG. 5 is a diagram of a location of an SL-PRS in a slot according to a rule for determining a symbol location according to an embodiment of this application.

As shown in FIG. 5, it is assumed that M is 2. Symbol locations occupied by a PSSCH are "3", "4", "5", "6", "7", "8", "9", "10", "11", and "12", symbol locations of DMRSs in the PSSCH are "3" and "10", and the symbol location of the last DMRS in the PSSCH is "10". In this case, symbol locations of two symbols for the SL-PRS are respectively "8" and "9".

It may be understood that FIG. 5 is merely an example, and does not constitute a limitation on embodiments of this application.

(2) In a same slot, M symbols for the SL-PRS are at N symbol locations including and just before the last symbol in the PSSCH, and the M symbol locations do not include a symbol location of the DMRS in the PSSCH.

Specifically, during determining of the symbol location of the SL-PRS, a symbol location occupied by the PSSCH may be first found in a slot, then the last symbol location is found in the symbol location occupied by the PSSCH. Then, forward mapping of the M symbols for the SL-PRS is performed from the last symbol location. In addition, in a mapping process, if there is the symbol location of the DMRS in the PSSCH, the symbol location is skipped and mapping is performed to a previous symbol location, until mapping of the M symbols is completed.

For example, FIG. 6 is a diagram of a location of an SL-PRS in a slot according to a rule for determining a symbol location according to an embodiment of this application.

As shown in FIG. 6, it is assumed that M is 2. Symbol locations occupied by a PSSCH are "3", "4", "5", "6", "7", "8", "9", "10", "11", and "12", and the last symbol location occupied by the PSSCH is "12". In this case, symbol locations of two symbols for the SL-PRS are respectively "11" and "12".

It may be understood that FIG. 6 is merely an example, and does not constitute a limitation on embodiments of this application.

It should be understood that, when the symbol location of the first SL-PRS is determined according to the rule for determining the symbol location of the SL-PRS, the number of symbols for the first SL-PRS may be obtained based on the configuration information of the SL-PRS.

It can be learned from the rule for determining the symbol location that, the symbol location of the SL-PRS is determined according to the determining rule based on the symbol location of the DMRS in the PSSCH, thereby avoiding a collision between the SL-PRS and the DMRS in a slot. In addition, the symbol location of the SL-PRS is at an end of the slot as much as possible, and a symbol occupied by the PSCCH is close to a front end of the slot, so that the determining rule further avoids a collision between the SL-PRS and a signal in the PSCCH.

The rule for determining the start subcarrier location of the start symbol for the SL-PRS is used to determine a start subcarrier location of the start symbol for the SL-PRS on a frequency-domain subcarrier.

For example, the rule for determining the start subcarrier location includes the following Formula 2:

$$RE_{offset} = (N_{ID}^X) \bmod N \qquad \text{Formula 2}$$

$RE_{offset}$ represents a start subcarrier location value or offset value of the start symbol for the SL-PRS in frequency domain, $N_{ID}^X$ is a decimal expression of a cyclic redundancy check (Cyclic Redundancy Code, CRC), and N represents a comb size of the SL-PRS.

It can be learned from Formula 2 that, the start subcarrier location of the start symbol for the SL-PRS is determined based on a value obtained by performing a modulo operation on the comb size of the SL-PRS based on the CRC.

It should be understood that, when the start subcarrier location of the start symbol for the first SL-PRS is determined according to the rule for determining the start subcarrier location of the start symbol for the SL-PRS, a comb size of the first SL-PRS may be obtained based on the configuration information of the SL-PRS, where the CRC may be a first CRC, and the first CRC is a cyclic redundancy check in SCI. The SCI may be first-stage SCI in the PSCCH, or may be second-stage SCI in the PSSCH. The SCI may be located in the first data sent by the first device to the second device, or may be located in data previously sent by the first device to the second device. This is not limited in embodiments of this application.

In a possible implementation, the rule for determining the symbol location of the SL-PRS and the rule for determining the start subcarrier location of the start symbol for the SL-PRS may be pre-configured in the first device and the second device, or may be specified in a protocol of communication between the first device and the second device. This is not limited in embodiments of this application.

It can be learned from Manner 2 that, for the time-frequency position of the SL-PRS, both devices may agree on the number of symbols, the comb size, and the preset rule in advance, so that the sender device and the receiver device can respectively send and receive the SL-PRS based on a same time-frequency mapping manner. In addition, compared with Manner 1, there is no need to notify the start symbol location and the start subcarrier location of the SL-PRS in advance before the SL-PRS is sent, thereby reducing signaling overheads.

In Manner 2, an interaction procedure between the sender device and the receiver device may include S201, S204, and S205 in the interaction procedure shown in FIG. 4. Details are not described herein again.

**Manner 3: The sender device and the receiver device determine the time-frequency position of the SL-PRS based on a pre-configured mapping relationship.**

In this manner, the first time-frequency mapping manner may be determined based on the configuration information of the SL-PRS, a mapping table for a symbol location of the SL-PRS, and the rule for determining the start subcarrier location of the start symbol for the SL-PRS.

The configuration information of the SL-PRS may include: the number of symbols and a comb size, and may further include: an initial symbol location and an initial subcarrier location. For details about the configuration information of the SL-PRS, refer to the related descriptions in the foregoing Manner 1. Details are not described herein again.

The mapping table for the symbol location of the SL-PRS is used to determine the symbol location of the SL-PRS. The mapping table for the symbol location of the SL-PRS describes mapping relationships, for different numbers of symbols for the SL-PRS, between the symbol location of the SL-PRS and the total number of symbols in a slot, the number of symbols for the DMRS in the PSSCH, and the number of symbols occupied by the PSCCH. The total number of symbols is a sum of the number of symbols for the AGC, the number of symbols occupied by the PSSCH, and the number of symbols occupied by the PSCCH.

For example, the following lists Table 1 to Table 3 as examples to respectively describe symbol locations of the SL-PRS in a slot for different numbers of symbols for the SL-PRS.

Table 1 The number of symbols for an SL-PRS is 1

| Total number of symbols | Symbol location of the SL-PRS | | | | | |
| --- | --- | --- | --- | --- | --- | --- |
| | PSCCH occupying two symbols | | | PSCCH occupying three symbols | | |
| | Number of symbols for a DMRS in a PSSCH | | | Number of symbols for the DMRS in the PSSCH | | |
| | 2 | 3 | 4 | 2 | 3 | 4 |
| 6 | 3 | | | 3 | | |
| 7 | 3 | | | 3 | | |
| 8 | 3 | | | 3 | | |
| 9 | 6 | 5 | | 6 | 6 | |
| 10 | 6 | 5 | | 6 | 6 | |
| 11 | 7 | 7 | 9 | 7 | 7 | 9 |
| 12 | 7 | 7 | 9 | 7 | 7 | 9 |
| 8 | 7 | 9 | 9 | 7 | 9 | 9 |

Table 2 The number of symbols for an SL-PRS is 2

| Total number of symbols | Symbol locations of the SL-PRS | | | | | |
| --- | --- | --- | --- | --- | --- | --- |
| | PSCCH occupying two symbols | | | PSCCH occupying three symbols | | |
| | Number of symbols for a DMRS in a PSSCH | | | Number of symbols for the DMRS in the PSSCH | | |
| | 2 | 3 | 4 | 2 | 3 | 4 |
| 6 | 3, 4 | | | 3, 4 | | |
| 7 | 3, 4 | | | 3, 4 | | |

(continued)

| Total number of symbols | Symbol locations of the SL-PRS | | | | | |
|---|---|---|---|---|---|---|
| | PSCCH occupying two symbols | | | PSCCH occupying three symbols | | |
| | Number of symbols for a DMRS in a PSSCH | | | Number of symbols for the DMRS in the PSSCH | | |
| | 2 | 3 | 4 | 2 | 3 | 4 |
| 8 | 3, 4 | | | 3, 4 | | |
| 9 | 5, 6 | 5, 6 | | 6, 7 | 5, 6 | |
| 10 | 5, 6 | 5, 6 | | 6, 7 | 5, 6 | |
| 11 | 6, 7 | 7, 8 | 8, 9 | 7, 8 | 7, 8 | 8, 9 |
| 12 | 6, 7 | 7, 8 | 8, 9 | 7, 8 | 7, 8 | 8, 9 |
| 8 | 6, 7 | 8, 9 | 8, 9 | 7, 8 | 8, 9 | 8, 9 |

Table 3 The number of symbols for an SL-PRS is 4

| Total number of symbols | Symbol locations of the SL-PRS | | | | | |
|---|---|---|---|---|---|---|
| | PSCCH occupying two symbols | | | PSCCH occupying three symbols | | |
| | Number of symbols for a DMRS in a PSSCH | | | Number of symbols for the DMRS in the PSSCH | | |
| | 2 | 3 | 4 | 2 | 3 | 4 |
| 6 | | | | | | |
| 7 | | | | | | |
| 8 | | | | | | |
| 9 | 4, 5, 6, 7 | | | | | |
| 10 | 4, 5, 6, 7 | | | | | |
| 11 | 5, 6, 7, 8 | | | 6, 7, 8, 9 | | |
| 12 | 5, 6, 7, 8 | | | 6, 7, 8, 9 | | |
| 8 | 5, 6, 7, 8 | 7, 8, 9, 10 | | 6, 7, 8, 9 | 7, 8, 9, 10 | |

It can be learned that Table 1 to Table 3 show distribution of symbol locations of the SL-PRS when numbers of symbols for the SL-PRS are 1, 2, and 4 respectively, where the symbol location of the SL-PRS is related to the total number of symbols, the number of symbols for the DMRS in the PSSCH, and the number of symbols occupied by the PSCCH. The number of symbols for the SL-PRS, the total number of symbols in a slot, the number of symbols for the DMRS in the PSSCH, and the number of symbols occupied by the PSCCH are determined, so that the symbol location of the SL-PRS in the slot may be determined with reference to the mapping tables shown in Table 1 to Table 3.

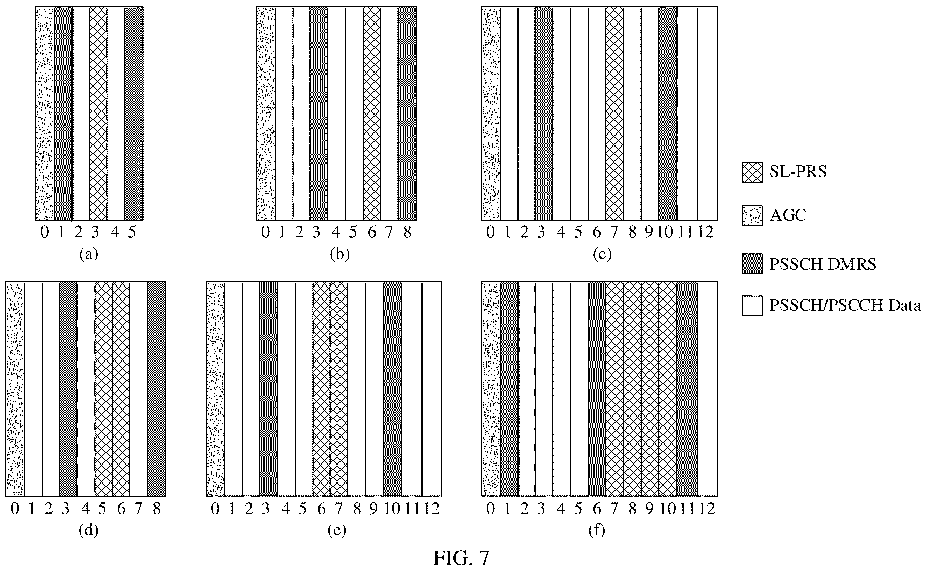

For example, assuming that the number of symbols for the SL-PRS is 1, it can be obtained through query from Table 1 that, when the total number of symbols is 6, the number of symbols occupied by the PSCCH is 2, and the number of symbols for the DMRS in the PSSCH is 2, the symbol location of the SL-PRS is "3". In this case, for a diagram of the symbol location of the SL-PRS in the slot, refer to (a) in FIG. 7.

For another example, assuming that the number of symbols for the SL-PRS is 1, it can be obtained through query from Table 1 that, when the total number of symbols is 9, the number of symbols occupied by the PSCCH is 2, and the number of symbols for the DMRS in the PSSCH is 2, the symbol location of the SL-PRS is "6". In this case, for a diagram of the symbol location of the SL-PRS in the slot, refer to (b) in FIG. 7.

For another example, assuming that the number of symbols for the SL-PRS is 1, it can be obtained through query from Table 1 that, when the total number of symbols is 8, the number of symbols occupied by the PSCCH is 2, and the number of symbols for the DMRS in the PSSCH is 2, the symbol location of the SL-PRS is "7". In this case, for a diagram of the symbol location of the SL-PRS in the slot, refer to (c) in FIG. 7.

For another example, assuming that the number of symbols for the SL-PRS is 2, it can be obtained through query from Table 2 that, when the total number of symbols is 9, the number of symbols occupied by the PSCCH is 2, and the number of symbols for the DMRS in the PSSCH is 2, the symbol locations of the SL-PRS are "5" and "6". In this case, for a diagram of the symbol locations of the SL-PRS in the slot, refer to (d) in FIG. 7.

For another example, assuming that the number of symbols for the SL-PRS is 2, it can be obtained through query from Table 2 that, when the total number of symbols is 8, the number of symbols occupied by the PSCCH is 2, and the number of symbols for the DMRS in the PSSCH is 2, the symbol locations of the SL-PRS are "6" and "7". In this case, for a diagram of the symbol locations of the SL-PRS in the slot, refer to (e) in FIG. 7.

For another example, assuming that the number of symbols for the SL-PRS is 4, it can be obtained through query from Table 3 that, when the total number of symbols is 8, the number of symbols occupied by the PSCCH is 2, and the number of symbols for the DMRS in the PSSCH is 3, the symbol locations of the SL-PRS are "7", "8", "9", and "10". In this case, for a diagram of the symbol locations of the SL-PRS in the slot, refer to (f) in FIG. 7.

It should be understood that (a) to (f) in FIG. 7 are merely examples, and do not constitute a limitation on embodiments of this application. In addition, Table 1 to Table 3 are merely examples of possible symbol locations of the SL-PRS in a slot. In actual application, there may be another case for a symbol location of the SL-PRS in a mapping table. This is not limited in embodiments of this application.

In addition, Table 1 to Table 3 only list the mapping tables for the symbol locations of the SL-PRS when the number of symbols is 1, 2, and 4. When a device indicates a value of more symbols, a mapping table for symbol locations of the SL-PRS for more symbols may also be included.

For example, in a possible implementation, the mapping table for the symbol location of the SL-PRS may be generated based on the symbol location of the DMRS in the PSSCH according to one or more of the following rules:

> **Rule 1:** The symbol location of the SL-PRS is in the middle of symbol locations of two adjacent DMRSs, and in a case in which the symbol location of the SL-PRS cannot be in the middle of symbol locations of two adjacent DMRSs, refer to Rule 3.
> **Rule 2:** The symbol location of the SL-PRS is close to a symbol location of a last DMRS.
> **Rule 3:** The symbol location of the SL-PRS is close to a symbol location of a DMRS on the right.

According to Rule 1, when the number of symbols for the SL-PRS is greater than 1, symbol locations of multiple SL-PRSs are not on two sides of a position of a DMRS in the PSSCH, which otherwise affects channel assessment performance of the DMRS. Because the location of the symbol occupied by the PSCCH is usually at the front end of a slot, Rule 2 can help, as much as possible, the symbol location of the SL-PRS be far away from the location of the symbol occupied by the PSCCH. In addition to having the effect of Rule 2, Rule 3 can also help a mapping table maker determine a unique fixed value as the symbol location of the SL-PRS as much as possible, to complete a procedure of determining a symbol location of the SL-PRS.

It may be understood that the foregoing Rule 1 to Rule 3 are merely specific mapping table generation rules for ease of understanding Table 1 to Table 3 and more mapping tables that may be subsequently formulated. In another embodiment of this application, a mapping table of the symbol location of the SL-PRS may be generated according to another rule, or more or fewer rules. This rule is not limited in embodiments of this application.

It should be understood that, when the symbol location of the first SL-PRS is determined through the mapping table of the symbol location of the SL-PRS, the mapping table of the symbol location of the SL-PRS in compliance with the symbol number of the first SL-PRS may be found from mapping tables of symbol locations of the SL-PRS for multiple symbol numbers, and the position of the first SL-PRS is determined based on a mapping relationship between the symbol location of the first SL-PRS and the total number of symbols for the slot in which the first SL-PRS is located, the number of symbols for the DMRS in the PSSCH, and the number of symbols occupied by the PSCCH in the mapping table. The number of symbols for the first SL-PRS may be obtained based on the configuration information of the SL-PRS.

In a possible implementation, for different numbers of symbols, the mapping table of the symbol location of the SL-PRS may be pre-configured in the first device and the second device, or may be formulated in a protocol of communication between the first device and the second device. This is not limited in embodiments of this application.

The rule for formulating the start subcarrier location of the start symbol for the SL-PRS includes: The start subcarrier location of the start symbol for the SL-PRS is determined based on a value obtained by performing a modulo operation on a comb size of the SL-PRS based on the CRC. For a specific rule for determining the start subcarrier location, refer to related content in the foregoing Formula 2. Details are not described herein again.

It can be learned from Manner 3 that, for the time-frequency rule of the SL-PRS, both devices may agree on, in advance, the number of symbols, the comb size, the pre-stored mapping table for the symbol location of the SL-PRS, and the preset rule for determining the start subcarrier location of the start symbol for the SL-PRS, so that the sender device and the receiver device can respectively send and receive the SL-PRS based on a same time-frequency mapping manner. In addition, compared with Manner 1, there is no need to notify the start symbol location and the start subcarrier location of the SL-PRS in advance before the SL-PRS is sent, thereby reducing signaling overheads.

In Manner 3, an interaction procedure between the sender device and the receiver device may include S201, S204, and S205 in the interaction procedure shown in FIG. 4. Details are not described herein again.

It may be understood that, to implement the functions in the foregoing embodiments, the network device and the terminal device include corresponding hardware structures and/or software modules for performing the functions. A person skilled in the art should be readily aware that, with reference to the units and method steps in the examples described in embodiments disclosed in this application, this application can be implemented by hardware or a combination of hardware and computer software. Whether a function is performed by hardware or hardware driven by computer software depends on a particular application scenario and a design constraint condition of the technical solutions.

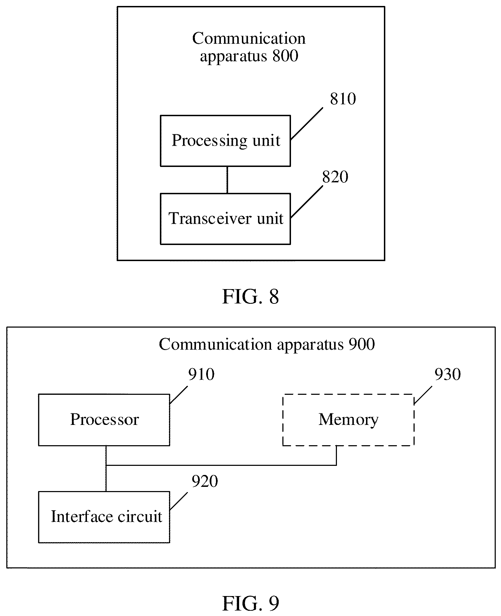

FIG. 8 and FIG. 9 are diagrams of structures of possible communication apparatuses according to embodiments of this application. These communication apparatuses may be configured to implement functions of the terminal device or the network device in the foregoing method embodiments, and therefore can also achieve beneficial effects of the foregoing method embodiments. In embodiments of this application, the communication apparatus may be the terminal device 1 or the terminal device 2 shown in (a), (b), and (c) in FIG. 1, or may be the network device shown in (a) and (b) in FIG. 1, or may be a module (for example, a chip) used in the terminal device or the network device.

As shown in FIG. 8, a communication apparatus 800 includes a processing unit 810 and a transceiver unit 820. The communication apparatus 800 is configured to implement the functions of the first device, the second device, or the base station in the method embodiments shown in FIG. 2 or FIG. 4.

When the communication apparatus 800 is configured to implement a function of the first device in the method embodiments shown in FIG. 2, the transceiver unit 820 is configured to: receive or send information involved in a process of establishing a communication connection to a second device, and send a first SL-PRS, first data, and the like to the second device based on a first time-frequency mapping manner. The processing unit 810 is configured to: determine the first time-frequency mapping manner, and determine a time-frequency position of an SL-PRS based on the first time-frequency mapping manner.

When the communication apparatus 800 is configured to implement a function of the second device in the method embodiments shown in FIG. 2, the transceiver unit 820 is configured to: receive or send information involved in a process of establishing a communication connection to a first device, and receive, based on a first time-frequency mapping manner, a first SL-PRS, first data, and the like sent by the first device. The processing unit 810 is configured to: determine the first time-frequency mapping manner, and determine a time-frequency position of an SL-PRS based on the first time-frequency mapping manner.

For more detailed descriptions about the processing unit 810 and the transceiver unit 820, directly refer to related descriptions in the method embodiments shown in FIG. 2. Details are not described herein again.

As shown in FIG. 9, a communication apparatus 900 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a memory 930, configured to store instructions executed by the processor 910, store input data needed by the processor 910 to run the instructions, or store data generated after the processor 910 runs the instructions.

When the communication apparatus 900 is configured to implement the method shown in FIG. 2, the processor 910 is configured to implement a function of the processing unit 810, and the interface circuit 920 is configured to implement a function of the transceiver unit 820.

When the communication apparatus is a chip used in a terminal, the chip of the terminal implements a function of the terminal in the foregoing method embodiments. The chip of the terminal receives information from another module (for example, a radio frequency module or an antenna) of the terminal, where the information is sent by a base station to the terminal. Alternatively, the chip of the terminal sends information to another module (for example, a radio frequency module or an antenna) of the terminal, where the information is sent by the terminal to a base station.

When the communication apparatus is a module used in a base station, the module of the base station implements a function of the base station in the foregoing method embodiments. The module of the base station receives information from another module (for example, a radio frequency module or an antenna) of the base station, where the information is sent by a terminal to the base station. Alternatively, the module of the base station sends information to another module (for example, a radio frequency module or an antenna) of the base station, where the information is sent by the base station to a terminal. The module of the base station herein may be a baseband chip of the base station, or may be a DU or another module. The DU herein may be a DU in an open radio access network (open radio access network, O-RAN) architecture.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuits, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented by hardware, or may be implemented by executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or a storage medium in any other form well-known in the art. For example, a storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in a base station or a terminal. Certainly, the processor and the storage medium may alternatively exist in the base station or the terminal as discrete components.

All or some of the foregoing embodiments may be implemented by using software, hardware, firmware, or any combination thereof. When software is used for implementation, all or some of embodiments may be implemented in a form of a computer program product. The computer program product includes one or more computer programs or instructions. When the computer programs or the instructions are loaded and executed on a computer, all or some of the procedures or functions according to embodiments of this application are performed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or logically conflicted, terms and/or descriptions in different embodiments are consistent and may be mutually referenced, and technical features in different embodiments may be combined based on an internal logical relationship thereof, to form a new embodiment.

Depending on whether optional is used in this specification: In this application, "at least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects. "Including at least one of A, B, and C" may indicate: including A; including B; including C; including A and B; including A and C; including B and C; and including A, B, and C.

It may be understood that various numbers in embodiments of this application are merely used for distinguishing for ease of description, and are not used to limit the scope of embodiments of this application. Sequence numbers of the foregoing processes do not mean an execution sequence, and the execution sequence of the processes should be determined based on functions and internal logic of the processes.

## Claims

1.   A positioning reference signal configuration method, wherein the method comprises:
     sending a first SL-PRS and first data in a same slot based on a first time-frequency mapping manner, wherein the first time-frequency mapping manner describes a time-frequency position of the first SL-PRS relative to a first demodulation reference signal DMRS in the first data in the same slot, and the first DMRS is a reference signal in a physical sidelink shared channel PSSCH.

2.   The method according to claim 1, wherein the first SL-PRS and the first data are sent based on configuration information of an SL-PRS, and the configuration information comprises the number of symbols and a comb size; and the first time-frequency mapping manner is determined based on the configuration information, wherein
     the number of symbols for the first SL-PRS in one slot is the number of symbols in the configuration information, and a comb size of the first SL-PRS in frequency domain is the comb size in the configuration information.

3.   The method according to claim 2, wherein the configuration information further comprises: an initial symbol location and an initial subcarrier location of the SL-PRS, wherein the initial symbol location is a start symbol location of a second SL-PRS when the second SL-PRS is sent, the initial subcarrier location is a start subcarrier location of the second SL-PRS, and a slot in which the second SL-PRS is located does not comprise data.

4. The method according to claim 2 or 3, wherein the configuration information comprised in a first device is information pre-configured in advance in the first device or information sent by a base station.

5. The method according to claim 3, wherein the first time-frequency mapping manner is further determined based on a first start symbol location and a first start subcarrier location, the first start symbol location is different from the initial symbol location, and the first start subcarrier location is different from the initial subcarrier location; and
before sending the first SL-PRS and the first data in the same slot, the method further comprises:
sending the first start symbol location and the first start subcarrier location, wherein a start symbol location of the first SL-PRS is the first start symbol location, and a start subcarrier location of the first SL-PRS is the first start subcarrier location.

6. A positioning reference signal configuration method, wherein the method comprises:
receiving a first SL-PRS and first data in a same slot based on a first time-frequency mapping manner, wherein the first time-frequency mapping manner describes a time-frequency position of the first SL-PRS relative to a first DMRS in the first data in the same slot, and the first DMRS is a reference signal in a PSSCH.

7. The method according to claim 6, wherein the first SL-PRS and the first data are received based on configuration information of an SL-PRS, and the configuration information comprises the number of symbols and a comb size; and
the first time-frequency mapping manner is determined based on the configuration information, wherein
the number of symbols for the first SL-PRS in one slot is the number of symbols in the configuration information, and a comb size of the first SL-PRS in frequency domain is the comb size in the configuration information.

8. The method according to claim 7, wherein the configuration information further comprises an initial symbol location and an initial subcarrier location of the SL-PRS, wherein the initial symbol location is a start symbol location of a second SL-PRS when the second SL-PRS is received, the initial subcarrier location is a start subcarrier location of the second SL-PRS, and a slot in which the second SL-PRS is located does not comprise data.

9. The method according to claim 7 or 8, wherein the configuration information comprised in a second device is information pre-configured in advance in the second device or information sent by a first device or a base station.

10. The method according to claim 8, wherein the first time-frequency mapping manner is further determined based on a first start symbol location and a first start subcarrier location, wherein the first start symbol location is different from the initial symbol location, and the first start subcarrier location is different from the initial subcarrier location; and
before receiving the first SL-PRS and the first data in the same slot, the method further comprises:
receiving the first start symbol location and the first start subcarrier location, wherein a start symbol location of the first SL-PRS is the first start symbol location, and a start subcarrier location of the first SL-PRS is the first start subcarrier location.

11. The method according to any one of claims 6 to 10, wherein the method further comprises:
determining, based on the first SL-PRS, location information of a device that sends the first SL-PRS, wherein the location information comprises one or more of the following: a distance, an angle, and an altitude.

12. The method according to any one of claims 1 to 11, wherein the first time-frequency mapping manner is further determined according to a rule for determining a symbol location of the SL-PRS, wherein
the rule for determining the symbol location comprises:
in a same slot, M symbols for the SL-PRS are at M symbol locations just before the last symbol for a DMRS in the PSSCH, or M symbols for the SL-PRS are at M symbol locations comprising and just before the last symbol in the PSSCH, wherein the M symbol locations do not comprise a symbol location of the DMRS in the PSSCH, and M is the number of symbols for the SL-PRS.

13. The method according to any one of claims 1 to 12, wherein the first time-frequency mapping manner is further determined based on mapping relationships, for different numbers of symbols, between the symbol location of the SL-PRS and the total number of symbols in a slot, the number of symbols for the DMRS in the PSSCH, and the number of symbols occupied by a physical sidelink control channel PSCCH; and
a symbol location of the first SL-PRS in a slot is determined based on a mapping relationship, for the number of symbols for the first SL-PRS, with the total number of symbols in the slot in which the first SL-PRS is located, the number of symbols for the DMRS in the PSSCH, and the number of symbols occupied by the PSCCH.

14. The method according to claim 12 or 13, wherein the first time-frequency mapping manner is further determined according to a rule for determining a start subcarrier location of a start symbol for the SL-PRS, wherein the rule for determining the start subcarrier location comprises:

the start subcarrier location of the start symbol for the SL-PRS is determined by a value obtained by performing a modulo operation on a comb size of the SL-PRS based on a cyclic redundancy check CRC; and a start subcarrier location of the first SL-PRS in a slot is determined based on a value obtained by performing a modulo operation on the comb size of the first SL-PRS based on a first CRC, wherein the first CRC is a cyclic redundancy check of sidelink control information SCI.

15. A communication apparatus, wherein the apparatus comprises a module or unit configured to implement the method according to any one of claims 1 to 5, or comprises a module or unit configured to implement the method according to any one of claims 6 to 11, or comprises a module or unit configured to implement the method according to any one of claims 12 to 14.

16. A communication apparatus, comprising a processor, wherein the processor is coupled to a memory, and the memory is configured to store a program or instructions; and when the program or the instructions are executed by the processor, the apparatus is enabled to perform the method according to any one of claims 1 to 5, or the apparatus is enabled to perform the method according to any one of claims 6 to **11,** or the apparatus is enabled to perform the method according to any one of claims 12 to 14.

17. An electronic device, comprising a memory, one or more processors, and one or more programs; and when the one or more processors execute the one or more programs, the electronic device is enabled to implement the method according to any one of claims 1 to 5, or implement the method according to any one of claims 6 to 11, or implement the method according to any one of claims 12 to 14.

18. A computer-readable storage medium, comprising instructions, wherein when the instructions are run on an electronic device, the electronic device is enabled to perform the method according to any one of claims 1 to 5, or perform the method according to any one of claims 6 to 11, or perform the method according to any one of claims 12 to 14.

19. A computer program product, wherein when the computer program product runs on a computer, the computer is enabled to perform the method according to any one of claims 1 to 5, or perform the method according to any one of claims 6 to 11, or perform the method according to any one of claims 12 to 14.

(a)

(b)

(c)

FIG. 1

First device

Second device

S101: Send a first SL-PRS and first data in a
same slot based on a first time-frequency
mapping manner, where the first time-frequency
mapping manner describes a time-frequency
position of the first SL-PRS relative to a first
DMRS in the first data in the same slot, and the
first DMRS is a reference signal on a PSSCH

S102: Receive the first SL-PRS and the
first data in the same slot based on the
first time-frequency mapping manner

FIG. 2

FIG. 3

First device                                                                      Second device

S201: Send configuration
information of an SL-PRS
- - - - - - - - - - - - - - - - - - - - - - - - - - - - - - - - ▶

S202: Determine a first start
symbol location and
a first start subcarrier location

S203: Send SCI indication information,
where the SCI indication information
includes the first start symbol location
and the first start subcarrier location
────────────────────────────────────────▶

S204: Send a first SL-PRS and first data in a
same slot based on a first time-frequency
mapping manner, where the first time-frequency
mapping manner describes a time-frequency
position of the first SL-PRS relative to a first
DMRS in the first data in the same slot, and the
first DMRS is a reference signal on a PSSCH
────────────────────────────────────────▶

S205: Receive the first SL-PRS and the
first data in the same slot based on the
first time-frequency mapping manner

FIG. 4

FIG. 5

FIG. 6

FIG. 7

Communication
apparatus 800

Processing unit — 810

Transceiver unit — 820

FIG. 8

Communication apparatus 900

Processor — 910

Memory — 930

Interface circuit — 920

FIG. 9

## INTERNATIONAL SEARCH REPORT

| International application No. |
|---|
| **PCT/CN2024/083671** |

**A.  CLASSIFICATION OF SUBJECT MATTER**

H04W4/029(2018.01)i

According to International Patent Classification (IPC) or to both national classification and IPC

**B.  FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI, 3GPP: 避免, 碰撞, 时隙, 同一, 位置, 相对, 相同, 侧链, 侧行, 定位参考信号, DMRS, PRS, SL, collision, DM-RS, same, slot, avoid

**C.  DOCUMENTS CONSIDERED TO BE RELEVANT**

| Category* | Citation of document, with indication, where appropriate, of the relevant passages | Relevant to claim No. |
|---|---|---|
| X | INTEL CORP. "FL Summary #4 on SL Positioning Reference Signal" *3GPP TSG RAN WG1 Meeting #112, R1-2302096*, 03 March 2023 (2023-03-03), section 2 | 1-19 |
| X | INTEL CORP. "FL Summary #3 on SL Positioning Reference Signal" *3GPP TSG RAN WG1 Meeting #112, R1-2302095*, 02 March 2023 (2023-03-02), section 2 | 1-19 |
| A | CN 115632750 A (DATANG MOBILE COMMUNICATIONS EQUIPMENT CO., LTD.) 20 January 2023 (2023-01-20) entire document | 1-19 |
| A | WO 2023193762 A1 (VIVO MOBILE COMMUNICATION CO., LTD.) 12 October 2023 (2023-10-12) entire document | 1-19 |

☐ Further documents are listed in the continuation of Box C.  ☑ See patent family annex.

| | |
|---|---|
| \*    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "D"  document cited by the applicant in the international application | "X"  document of particular relevance; the claimed invention cannot be considered novel or cannot be considered to involve an inventive step when the document is taken alone |
| "E"  earlier application or patent but published on or after the international filing date | |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | "&"  document member of the same patent family |
| "P"  document published prior to the international filing date but later than the priority date claimed | |

| Date of the actual completion of the international search | Date of mailing of the international search report |
|---|---|
| **20 May 2024** | **24 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/083671**

| Patent document cited in search report | | | Publication date (day/month/year) | Patent family member(s) | | | Publication date (day/month/year) |
|---|---|---|---|---|---|---|---|
| CN | 115632750 | A | 20 January 2023 | WO | 2021121058 | A1 | 24 June 2021 |
| WO | 2023193762 | A1 | 12 October 2023 | CN | 116938415 | A | 24 October 2023 |

Form PCT/ISA/210 (patent family annex) (July 2022)

**REFERENCES CITED IN THE DESCRIPTION**

**Patent documents cited in the description**

- CN 202310431146